# EUROPEAN PATENT APPLICATION

(11) **EP 2 927 652 A2**
(43) Date of publication of application: **07.10.2015**
(21) Application number: 15162137.2
(22) Date of filing: 01.04.2015
(51) Int. Cl.: G01L 1/12

(54) **EDDY CURRENT LOAD SENSOR**

(30) Priority: 01.04.2014 EP 14163040
(71) Applicant: Torque and More (TAM) GmbH, 82319 Starnberg (DE)
(72) Inventor: MAY, Lutz, 82335 Berg (DE)
(74) Representative: Maiwald Patentanwalts GmbH

(57) **Abstract**

Sensor unit for determining a mechanical load onto an object being capable of determining a mechanical load onto the object to be loaded based on the eddy current related modulation of a detected signal.

## Description

### Field of the Invention

The present invention relates to a device and a method for sensing mechanical forces onto an object to be loaded, and in particular to a device and a method for sensing mechanical forces based on a modification of eddy currents resulting from a mechanical impact and the detection of the modified eddy currents.

### Background of the Invention

In particular when measuring mechanical forces on moving objects, like revolving shafts, it is desired to have a contact-less measurement of the mechanical forces. The mechanical forces can be for example torque on driving shafts, like in cars, bikes etc. The upcoming e-bikes make it necessary to measure the applied torque to the crank shaft in order to control the electric motor support. As an e-bike is a mobile device, a lightweight an small sensor system is required, which is easy to apply and insensitive against mounting tolerances.

### Summary of the Invention

It would be desireable to provide an improved device and method for measuring a mechanical load onto an object to be loaded.

The invention provides a method and device for an improved device for measuring a mechanical load onto an object to be loaded according to the subject matter of the independent claims. Further embodiments are incorporated in the dependent claims.

According to an embodiment of the invention there is provided a sensor unit for determining a mechanical load onto an object to be loaded, the sensor unit comprises: a coil being adapted to generate a magnetic flux in the object to be loaded, a current detector device for detecting a current through the coil, a controlling device including a driving device and an evaluation device, wherein the driving device is adapted to drive a predetermined voltage having a constant amplitude over the coil, wherein the voltage has a predetermined driving frequency, wherein the evaluation device comprises a comparator for comparing the predetermined driving voltage with the detected current through the coil, and is adapted to determine the mechanical load onto the object to be loaded based on the eddy current related modulation of the detected current through the coil.

Thus, it is possible to measure an mechanical impact or force onto an object to be loaded with an simple build up of a sensor unit. For the generation of a magnetic field and a sensing of a modulation of the magnetic field resulting from an eddy current generated modulation, the same elements can be used. The comparison of the generating signal and the modulated signal will provide a measure for the applied force onto the object to be measured. Constant voltage amplitude and frequency allow the current detection, which current is modulated based on the eddy current effect in the object to be loaded.

According to a further embodiment of the invention there is provided a sensor unit for determining a mechanical load onto an object to be loaded, the sensor unit comprises: a coil being adapted to generate a magnetic flux in the object to be loaded, a voltage detector device for detecting a voltage drop over the coil, a controlling device including a driving device and an evaluation device, wherein the driving device is adapted to drive a predetermined current having a constant amplitude through the coil, wherein the current has a predetermined driving frequency, wherein the evaluation device comprises a comparator for comparing the predetermined driving current with the detected voltage drop over the coil, and is adapted to determine the mechanical load onto the object to be loaded based on the eddy current related modulation of the detected voltage drop over the coil.

Thus, it is possible to measure an mechanical impact or force onto an object to be loaded with an simple build up of a sensor unit. For the generation of a magnetic field and a sensing of a modulation of the magnetic field resulting from an eddy current generated modulation, the same elements can be used. The comparison of the generating signal and the modulated signal will provide a measure for the applied force onto the object to be measured. Constant current amplitude and frequency allow the voltage detection, which voltage is modulated based on the eddy current effect in the object to be loaded.

According to an embodiment of the invention the evaluation device comprises a normalizing unit being adapted to normalize at least one of the both compared signals, so as to align the amplitudes of the both compared signals.

Thus, it is easier to compare the both signals, the generating signal, e.g. the constant voltage signal and the modulated current signal, or the constant current signal and the modulated voltage signal. If both signals are in the same range or have almost the same peak value, the modulation can be determined very exactly and the mechanical force impact can be determined very exactly.

According to an embodiment of the invention the evaluation unit comprises a peak detector for each of the compared signals, and the comparator is adapted to compare peak values of the signals to be compared.

Thus, it is possible to easy compare the amplitudes of the generating signal as well as the modulated signal. The signal processing can be simplified when comparing peak values.

According to an embodiment of the invention the sensor unit comprises a distance sensor being adapted to detect the distance of the sensor unit with respect to the object to be loaded.

Thus, a possible effect of a distance of the signal unit to the object to be loaded can be determined and the respective failure resulting there from can be compensated, so that the mechanical force impact can be determined more exactly.

According to an embodiment of the invention the sensor device comprises a temperature detecting device being adapted to detect a temperature being representative for a temperature of the object to be loaded, wherein the evaluation unit is adapted to determine the load onto the object to be loaded additionally based on the detected temperature.

Thus, a temperature effect of the eddy current effect can be compensated. If the respective temperature of the object is known, here from the temperature measuring process, based on a known temperature coefficient the deviation can be calculated and the respective failure can be compensated.

According to an embodiment of the invention the controlling device comprises an initialization device being adapted to detect optimal settings for the driving device based on a modulation of at least one of a driving frequency and a current or voltage amplitude, respectively, and the determination of a optimum gain in the evaluation device.

Thus, it is possible to e.g. automatically scan a range of parameters like e.g. amplitude ranges and frequency ranges, so as to determine an optimum amplitude and/or frequency. This may be helpful, in case the object to be loaded shows a poor response at particular frequencies, those frequencies can automatically avoided. The initialization device may receive input from the generator unit as well as from an output so as to establish a relation between the generator signal properties and the output. The initialization deice then may act on an oscillator to adapt the frequency and/or the amplitude for the generator.

According to an embodiment of the invention the sensor unit further comprises a flux concentrator having wound the coil there around.

Thus, the magnetic flux can be concentrated and the signal quality may be increased. The flux concentrator may concentrate the magnetic flux at a sensing location of the object to be loaded.

According to an embodiment of the invention the flux concentrator comprises a middle portion carrying the coil and two yoke legs having the end faces, wherein the two yoke legs each have a hole for receiving a respective end section of the middle portion of the flux concentrator.

Thus, a manufacturing process can be simplified, as the coil can be either directly wound around a center or middle portion or can be wound around a bobbin which can be put on the middle or centre section before connecting the centre portion to the legs of the flux concentrator.

According to an embodiment of the invention the flux concentrator comprises a ferromagnetic or ferrite yoke having two end faces, which two end faces facing the object to be loaded.

Thus, the magnetic flux can be exactly concentrated to the object to be measured.

According to an embodiment of the invention the distance sensor is a coil being arranged between the two end faces of the flux concentrator and having an orientation toward the object to be loaded.

Thus, a variable distance between the sensor unit and the object to be loaded can be compensated so that the sensor unit is insensitive for mounting tolerances.

According to an embodiment of the invention the end faces are formed so as to correspond to the surface of the object to be loaded.

Thus, the distance between the end faces of the flux concentrator and the object to be measured can be optimized. Further, a constant air gap between the flux concentrator and the object provide a reliable measuring result.

According to an embodiment of the invention the two end faces are partial faces of a circular cylinder.

Thus, also for an object having a circular cross section, a constant air gap between the flux concentrator and the object can be provided to allow a reliable measuring result.

According to an embodiment of the invention a sensor system comprises a sensor unit as described above and an object to be loaded, wherein the coil is wound around the object to be loaded.

Thus, the magnetic field can be directly generated in the object to be loaded. The applied force modifies the eddy current generated in the object to be loaded, so that the modification can be detected at the coil as a current or a voltage, respectively.

According to an embodiment of the invention, the sensor system further comprises a separate magnetic field sensing device being aligned to the object to be loaded and having a main detection direction being substantially parallel to an axis around which the coil is wound.

Thus, additionally to the measurement at the coil as such, a modification of the magnetic flux in the object and thus the magnetic field at the site of the separate magnetic field sensing device can be detected with the magnetic field sensing device. It should be noted that it is possible to measure also other modification effects than an eddy current effect. The separate magnetic field sensing device may be a coil. This coil may have a ferromagnetic or ferrite core. The coil with or without a core may be aligned to the object to be measured. The generator coil may be tightly be wound around the object with aligned measuring coil (with or without core). The wound generator coil may constitute the mounting of the measuring coil at the object. In this case the measuring coil is fixedly connected to the object. This arrangement may be applied to non-moving objects or objects with a limited moving path length. The measuring coil (with or without core) may also be aligned to a sleeve so that the windings of the generator coil may be used as a mounting for the measuring coil onto the sleeve. The object may be put through the through opening of the sleeve, so that the object can move with respect to the sleeve.

According to an embodiment of the invention a sensor system comprises a sensor unit as described above, and an object to be loaded, wherein the coil has a larger diameter than its length and is arranged so as to face a surface of the object to be loaded, wherein the object to be loaded has a circular cross section and the coil has a shape following the bended surface of the object to be loaded.

It should be noted that the above features may also be combined. The combination of the above features may also lead to synergetic effects, even if not explicitly described in detail.

These and other aspects of the present invention will become apparent from and elucidated with reference to the embodiments described hereinafter.

### Brief Description of the Drawings

Exemplary embodiments of the present invention will be described in the following with reference to the following drawings.
Fig. 1 illustrates an exemplary embodiment of the invention with an exemplary build up for definition purposes.
Fig. 2 illustrates an exemplary embodiment of the invention with an one coil only flux concentrator.
Fig. 3 illustrates an exemplary embodiment of the invention with an one coil only flux concentrator having a reduced height.
Fig. 4 illustrates an exemplary embodiment of the invention with a modular flux concentrator for an easier mounting of the coil.
Fig. 5A to C illustrate exemplary embodiment of the invention with different orientations of the flux concentrator in relation to the object.
Fig. 6. illustrates an exemplary embodiment of the invention with a constant voltage signal drive.
Fig. 7. illustrates an exemplary embodiment of the invention with a constant current signal drive.
Fig. 8. illustrates an exemplary embodiment of the invention with different tilting angles of the flux concentrator.
Fig. 9. illustrates an exemplary embodiment of the invention with a distance measuring device/coil.
Fig. 10. illustrates an exemplary embodiment of the invention with a flat coil following the contour of the object surface.
Fig. 11. illustrates an exemplary embodiment of the invention with a coil wound around the object, here in form of a shaft.
Fig. 12 illustrates an exemplary embodiment of the invention with a separate measuring coil aligned to the object with a generator coil wound around.
Fig. 13 illustrates an exemplary embodiment of the invention with a separate measuring coil aligned to a sleeve with a generator coil wound around.
Fig. 14. illustrates an exemplary embodiment of the controlling unit.
Fig. 15. illustrates a further exemplary embodiment of the controlling unit.

### Detailed Description of Exemplary Embodiments

The present invention relates to a magnetic principle based non-contact mechanical force sensing technology that no longer requires any type of treatment of the ferromagnetic test-object from where the measurements have to be taken and is very low complexity design. The described sensing module is using only one inductor for the force measurement which may be any mechanical impact like bending or torque forces. The inductor may be a coil with or without a core. It should be noted that the entire sensor unit 1 may have additional coils, which however are used for additional measurements, like for example a distance measurement. Measurements can be taken immediately when holding the sensing module nearest to the test-object, also referred to as object to be loaded. The physical principle behind this invention is to measure the magnetic energy dissipation caused by the applied mechanical stresses at the object to be loaded. This sensing technology is called by the inventor "Active-4 Sensor". This is the 4th generation of "Active" sensor technologies developed by the inventor. While earlier sensors detect the tilting, angular turning, directional change or amplitude modulation of magnetic fields inside the object to be loaded caused by applying mechanical forces to the object to be loaded, a sensor according to this invention detect or measure the dissipation of magnetic energy that is happen inside the object to be loaded. The energy will be converted into heat inside the ferromagnetic object to be loaded. Another key difference of the present invention design in comparison to the previous sensors is that inside the sensing unit 1 less components are required: In total only one inductor is needed for generating a magnetic flux and detection a signal being representative for a mechanical load onto the object to be loaded.

When the object to be loaded has been tooled from ferromagnetic materials it is possible to detect and to measure mechanical forces that are applied to the object to be loaded by using magnetic principle based sensors. Magnetic fields that travel through the sensing region (that is the location from where the mechanical force measurement will be taken) will be influenced in their properties by the mechanical stresses that are applied to the object to be loaded. Mechanical stress acting on the object to be loaded has the ability to influence magnetic flux lines travelling within the object to be loaded in the following ways: Linear shifts of the entry / exit points of the magnetic flux lines (by up-to 5 mm) may occur that are traveling through the object to be loaded. Influencing the angular direction of the flow of the magnetic flux lines (by up-to 5 degree angle) may occur. Modulations of the permeability of the object to be loaded in a specific direction depending on the type of mechanical stress applied may occur. Modulations of the magnetic retention capability, magnetic remanescence, of the object to be loaded may occur including the ability to retain magnetic field inside the object to be loaded. Modulations of the eddy-current effect increasing or decreasing the eddy-current in a particular direction may occur.

This invention describes a mechanical force sensor technology that is using an eddy-current modulation effect in ferromagnetic objects. When applying an alternating magnetic field to a ferromagnetic object to be loaded at the sensing region then eddy-currents will take effect. The eddy-current effect will contribute to the losses of the energy budget or power budget of the source of the alternating magnetic field. The more eddy-currents exist, the larger the power losses are of the magnetic energy source.

Besides the mechanical stresses that act on the object to be loaded at the sensing region, changes in the operating temperature of the object to be loaded also modulate or influence the amount of eddy-current. In order to distinguish between the possible influential sources of the eddy-current modulation effects, it is possible to improve the detection quality if the operating temperature of the test-object is either kept constant or is known. Other factors that influence the amount of eddy-currents in an object are: the electric conductivity in Ohm and the operational frequency of the alternating magnetic field source. The lower the electric impedance and the higher the operational frequency of the alternating magnetic field source are, the larger the eddy-current effect will be.

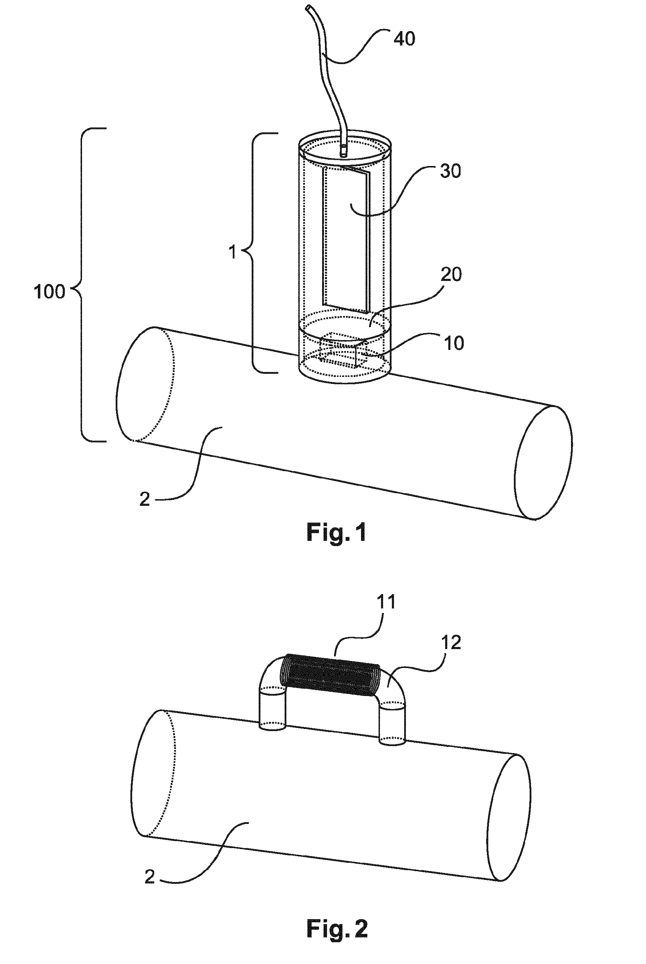

Fig. 1 illustrates the definitions of the terms sensor unit 1, sensing module 20, sensing element 10, sensor system 100, and object 2 to be loaded. The sensor unit comprises a sensing module 20 and the sensor electronics 30. Inside the sensing module 20 is a sensing-element 10 that has two functions: Converting electric energy into magnetic fields, and indicating about how much of the energy used to generate a magnetic field has been dissipated within the object 2 to be loaded, losses caused by eddy-currents, for example. The sensing module 20 has to be placed nearest to the object to be loaded. The object to be loaded is the item from where mechanical forces have to be measured. Together, the sensor unit 1 and the object 2 to be loaded will built a sensor system 100. The location at the object 2 to be loaded where the sensing module 20 is pointed at is called sensing location. The sensor system comprises the following three units: 1. The object to be loaded of a ferromagnetic material like a power transmitting shaft where the mechanical forces have to be measured from. 2. The sensing module 20 with the sensing element 10. The sensing module needs to be placed nearest the object to be loaded where the mechanical forces have to be measured from. 3. The so called SCSP Electronics: Signal Conditioning and Signal Processing Electronics, also referred to as controlling device 30.

The sensing module 20 and the sensing electronics 30 together are here called the sensor unit 1 or sensor device. The object to be loaded can be of any shape like symmetrically shaped shaft or beam, flat non-symmetrically shaped beam, tube, etc. and has to be tooled from ferromagnetic material. For the sensor of the invention to work properly, the alloy used to build the object to be loaded does not have to have any magnetic retention capability so that it does not matter if the ferromagnetic material has magnetic retention capability or it does not have magnetic retention capability. The invention will work properly in both cases. The raw signal output 40 of the sensor unit 1 will be of better quality and of better performance when the object to be loaded has been hardened. Better performance means that the measurement signal hysteresis may be larger when using un-hardened object to be loaded. It is not necessary that the entire object to be loaded has to be hardened. It is sufficient when the hardening process has been applied at least to the sensing location.

Fig. 2 illustrates the sensing element 10 inside the sensing module which comprises an alternating magnetic field generating device, which can be a inductor (coil), mounted in a holder or a fixture that allows to place this magnetic field generator nearest to the actual sensing location. The inductor (coil) 11 is electrically driven by a signal generator 31, 33 (not shown) that operates at a certain frequency and is capable to drive the inductor load. The alternating magnetic field which essentially is a form of energy travels e.g. through the flux concentrator 12 into the surface of the object to be loaded and from there again back into the flux concentrator 12. Depending on the amount and the orientation of the mechanical stress that is applied to the object 2 to be loaded, the magnetic energy-flow will be modulated, meaning that with a high mechanical stress applied a higher amount of energy will be dissipated by the object to be loaded. In reverse, when the object to be loaded is in a relaxed condition, i.e. no mechanical stress applied then the energy dissipation in the object to be loaded is at its lowest level assuming that all the other conditions are kept constant or identical.

Fig. 2 also illustrates a basic design mechanical force sensing module without the electronics 30. In this case a symmetrically shaped object 2 to be loaded is shown like a drive shaft. The magnetic field generated, i.e. energy in the inductor 11 will penetrate the object 2 to be loaded and will travel through the object to be loaded for a defined distance between the two pole shoes 17 of the flux concentrator 12. The object 2 to be loaded will absorb or dissipate some of the magnetic field energy depending on the direction and the amount of the applied mechanical stresses to the object 2 to be loaded. The magnetic field generating device 11 also acts as the signal receiving device. There are no other components necessary inside the sensing module, other than the flux concentrator 12 and a single coil 11 (inductor) wound around part or the whole flux concentrator 12. Even the flux concentrator 12 can be left out, however the quality of the signal will be probably poorer. Embodiments without a flux concentrator 12 will be described later.

The later described sensor electronics 30, also denoted as controlling device 30 has two main functions: Generating the signal to drive the magnetic field generator 11 (inductor or coil) to be done by the signal generator 31, 33, 35, and to recover and process the signal modulation, coming back from the sensing module to be done by the Signal Conditioning and Signal Processing (SCSP) module of the sensor electronics 30. The electronic signal generator 31, 33, 35 that is driving the magnetic field generator coil 11 is operating with a constant output voltage. A higher or lower magnetic energy dissipation caused by the mechanical stresses that are applied to the object 2 to be loaded results in a modulation of the electric current flow through the magnetic field generating inductor 11.

The SCSP module, also referred to as evaluation unit 36-40 of the sensor electronics 30 has the task to identify and to measure the amount of the modulation of the supply current that is driving the magnetic field generator coil 1. After the sensing module has been placed in the correct position and orientation in relation to the "to-be-measured" mechanical forces, a sensor initialization process may be executed. During the initialization process that can be initiated manually or automatically the sensor electronics 30 will identify the optimal signal generator and signal processing settings and will store these "settings" in the internal non-volatile memory. When using a non-volatile memory for the sensor settings, then the initialization process can be executed only the very first time when the sensor will be used together with a specific object to be loaded and at a specific sensing location.

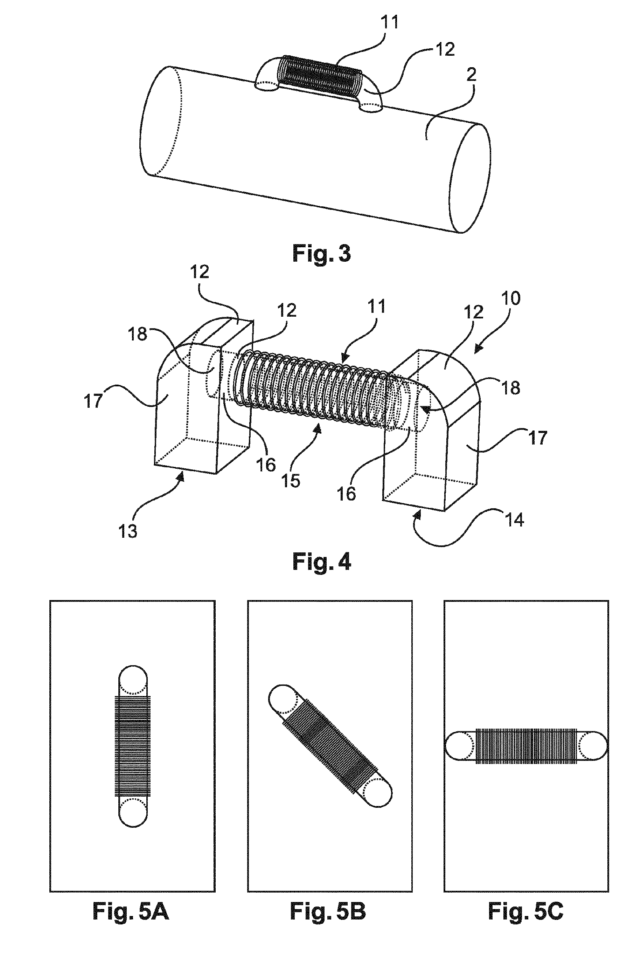

Fig. 3 illustrates an embodiment with a low profile flux concentrator 12, so that the entire height of the sensing element 10 is very low. As there is no need for a standalone magnetic field sensing device, the absolute height profile of the sensing module remains very low, like a few millimeters only. This allows the use of this sensing solution in applications where there is little space available.

Fig. 4 illustrates an inductor 11 (coil) wound around a straight magnetic core device, which may be considered as a middle or centre portion 15 of a flux concentrator 12. The ends 16 of the centre portion 15 of the magnetic core device may be inserted into hole 18 two magnetic conducting devices 17, which may form a yoke leg of the flux concentrator 12. These yoke legs 17 may channel the magnetic field lines via the end faces 13 and 14 to the object 2 to be loaded. The straight magnetic core device 15 and the two side devices 17 form the flux concentrator 12. This specific flux concentrator design will help to simplify the coil winding process as it is much easier and cheaper winding the coil wire around a straight core device 15.

Fig. 5 illustrates the different orientations of the sensing element 10 considering the mechanical force to be measured. The orientation with which the magnetic flux lines will travel through the surface of the object to be loaded will decide about: which mechanical forces will be detected and measured by the sensor unit. Therefore great care has to be taken when placing the sensing module 20 or sensing element 10 at the object 2 to be loaded. Depending on the angular orientation of the main axis of the flux concentrator 12 as shown in Fig. 5 or any other angle, a specific mechanical force will be detected and measured more easily, while the signals from other mechanical forces will be suppressed or cancelled. The orientation in Fig. 5A in which the magnetically effective axis of the flux concentrator 12 is placed onto the object 2 to be loaded with a 0° degree angle in relation to the main axis of the object to be loaded is most suitable to measure torque forces that will be applied to the object to be loaded and will almost completely suppress the effects caused by bending forces. The sensing module orientation in Fig. 5B, in which the magnetically effective axis of the flux concentrator 12 is placed onto the object to be loaded with a 45° degree angle in relation to the main axis of the object to be loaded is most suitable to measure bending forces that will be applied to the object to be loaded and will almost completely suppress the effects of applied torque forces. Any angle between these two positions in Fig. 5A and Fig. 5B, i.e. >0° to <45° will result that the sensor signal output represents a mixture of both: torque forces and bending forces. The orientation according to Fig. 5C will allow measuring torque forces and will suppress bending forces that are applied to the object to be loaded.

In alternative magnetic principle based sensor system a magnetic field sensing (MFS) coil is used to pick-up the signals emitted from the test object. In these cases the MFS-coil is part of a flux-gate sensor system. "Flux-gate" means that the MFS coil is powered by an alternating current signal which results in the creation of an alternating magnetic field inside the MFS-coil. In the centre of the MFS-coil is placed a very small and short, high permeability, ferromagnetic core. However, the passive sensing technology will work only after the object to be loaded has been permanently magnetized which requires that a proprietary magnetization process that will be applied to the sensing region of the object to be loaded. The main purpose of the MFS-coil when used in a "passive" sensor system is to detect and measure an absolute magnetic field emanating from the permanently magnetized object to be loaded. However, the sensor unit according to the invention does not require a separate and "one-time" magnetization process for the object to be loaded. In both cases of the magnetic principle based sensing technologies the inductor is driven by an alternating current of a fixed frequency. While at the prior art passive sensing technology the flux-gate electronics is measuring changes in the magnetic field strength coming from the permanently magnetised object to be loaded, in the technology according to the invention allows measuring the energy dissipation within the surface of the object to be loaded.

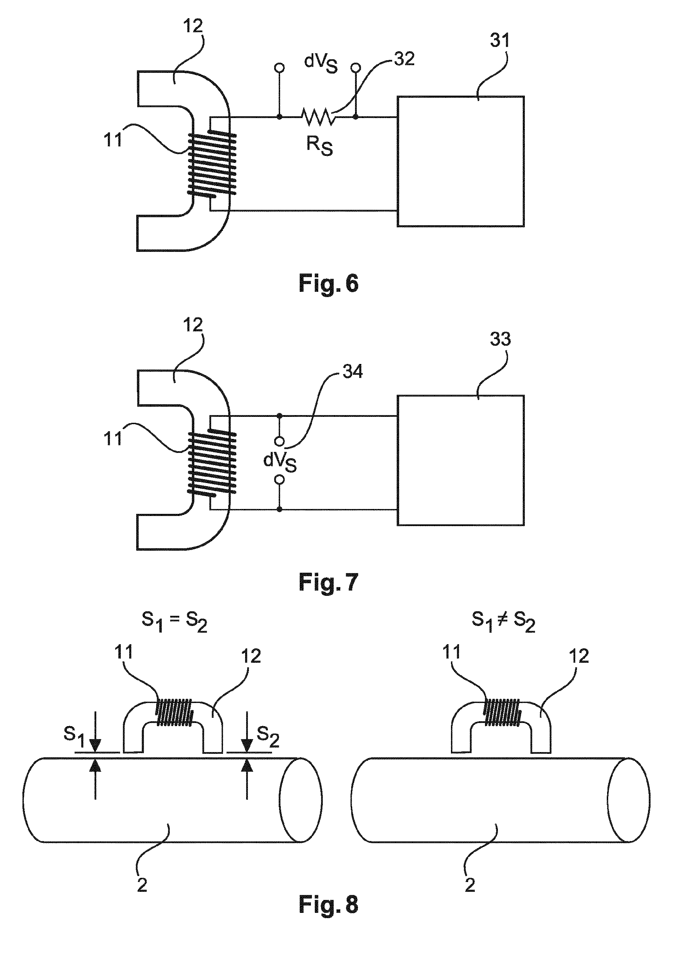

Fig. 6 illustrates that the magnetic field generating and sensing coil 11 is powered by an electronic driver circuit that is providing the alternating current signal. There are two different design options of the electronic power-driver-circuit to choose from: Using a constant voltage amplitude driver, or constant current driver signal. depending on the chosen power-driver circuit, the signal recovering circuit to measure the eddy-current related energy dissipation will have to look different as well.

Fig. 6 illustrates a sense resistor Rₛ which operates as a shunt resistor and is placed in series to the magnetic field generating coil 11. Any changes in the energy absorption within the surface of the object 2 to be loaded, caused by changes of the applied mechanical stresses can be detected by measuring the changes in the voltage drop dVₛ across the sense resistor Rₛ. When the sensing module is used as intended and placed correctly nearest the surface of the object 2 to be loaded at the desired sensing location, then the measured amplitude peak-to-peak, or the converted true RMS Voltage of the alternating signal dVₛ will increase with the increase in relation to the applied mechanical stresses.

Fig. 6 illustrates the gaining of a raw and untreated measurement signal of the sensor with where voltage drop changes at the resistor Rₛ. Changes in the mechanical forces that are applied to the object 2 to be loaded result in changes in the electric current that runs through the inductor (coil) 11.

Fig. 7 illustrates an embodiment with a constant current driver signal. In this design option there is no need for an additional sense resistor as the voltage drop across the Inductor (coil) 11 will be measured at terminals 34. The driver signal, coming from the sensor electronics 33, is a constant current, alternating voltage signal. The output signal of the sensing module (dV_{S}) will then have to be rectified and integrated to measure the voltage amplitude differences, caused by the applied mechanical forces to the object 2 to be loaded. As can be seen from Fig. 7, any changes in the energy dissipation within the object 2 to be loaded caused by the applied mechanical forces to the object 2 to be loaded will cause changes in the integrated voltage drop (dV_{S}) across the inductor 11.

Fig. 8 illustrates the result of a tilted sensor. A single coil sensing element design results in a very balanced and symmetrical sensor signal output as the sensed signal will be generated by the same coil that is used to generate the magnetic field.

Therefore the physical use of the sensing module (with the sensing element inside) is very uncritical and very forgiving in case when the sensing module may be slightly tilted , i.e. is not parallel in relation to the surface of the object 2 to be loaded. A single coil design can tolerate changes in the spacing (S1 and S2) between the two pole shoes of the flux concentrator 12 and the surface of the object 2 to be loaded.

In the technology of the invention the sensor signal is recovered from one and the same coil 11 that is also used to generate the magnetic field to be partially absorbed and dissipated by the object 2 to be loaded. The provision of only one coil for the force measurement eliminates the risk of an uncontrolled signal phase shift between the generator signal and the recovered measurement signal. It makes the automatic compensation for distance changes between the sensing module and the object 2 to be loaded very easy and reliable.

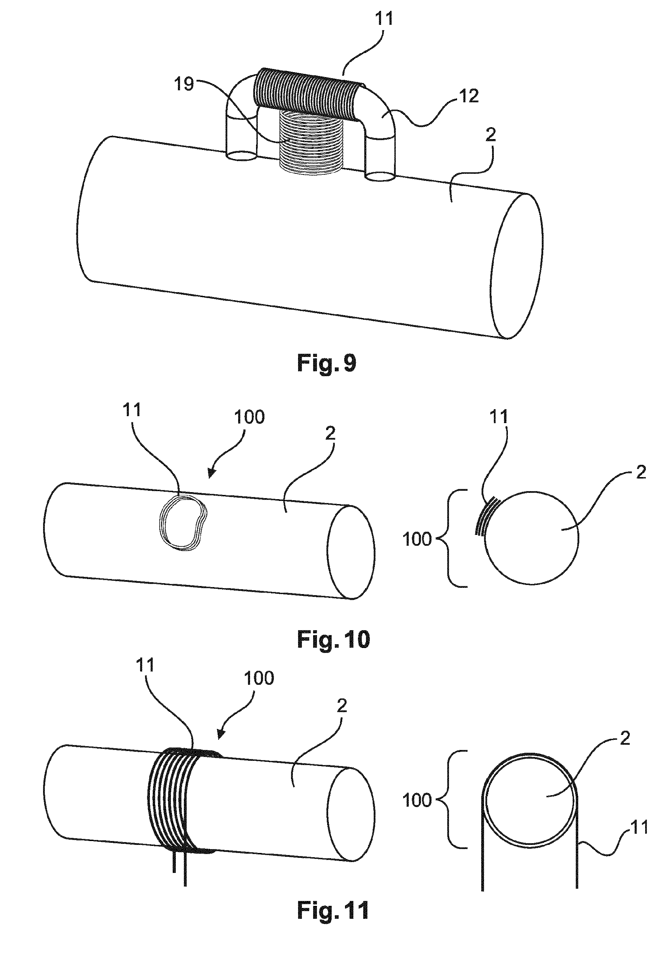

Fig. 9 illustrates the provision of a distance sensing arrangement, e.g. a distance sensing coil 19. In order to compensate for the signal gain modulation, caused by changing of the spacing (distance) between the sensing module and the object 2 to be loaded, the spacing (distance) has to be measured in real-time. The result of the distance measurement will then be used to compensate for the changes in the torque measurements: offset and gain. This compensation can be executed in the computation device that is part of the sensor electronics. One simple way to measure the spacing (distance or air-gap) between the sensing module and the surface of the object 2 to be loaded is to place a "non-contact" distance sensor 19 inside the sensing module. There are different potential solutions available that will allow to measure the distance relatively accurately, e.g. optically based on a reflection principle, magnetically based on different principles are here available, e.g. eddy current, absorption, coupling, etc., and ultrasonic based on e.g. time delay, phase comparison, etc. When choosing a magnetic principle based distance sensor then the operational frequencies used to drive the inventive sensor and to drive the distance sensor have to be different and should not interfere with each other.

In Fig. 9 an exemplary design of the Sensing Module with integrated magnetic principle based distance sensor 19 is illustrated. It is very helpful when the distance sensor 19 is placed in the geometric centre of the magnetic field generator coil 11. In this way the distance sensor 19 will integrate the distance changes from both flux concentrator pole shoes 16 build an average measurement of both distance measurements: ½ (S1+S2)).

The sensor system features and benefits are a true non-contact sensor design, no magnetic pre-processing or magnetic post-processing of the object 2 to be loaded is required, the ferromagnetic object 2 to be loaded does not have to have any magnetic retention capabilities for this sensor technology to work so that lower cost materials can be used. In the simplest design only one coil 11 (e.g. wound onto the flux concentrator12) is required to measure reliably the applied mechanical forces. There is no need for a separate and standalone sensing coil, as required in previous sensor designs. The inventive sensor has a very low-complexity and has no uncontrolled signal-phase-delay issues that may prohibit real-time distance compensation. There is a very low mechanical profile (of the sensing module) as there is no need of separate, standalone sensing coil. The sensor allows to place the sensing module in tight-space applications. The sensing module can be held from the side only onto the test object and does not have to go around the object 2 to be loaded , which is very easy to apply. An air-gap between sensing module and a surface of the object 2 to be loaded be 3 mm and more. The single coil sensing module design is very tolerant to the placement of the sensing module in relation to the object 2 to be loaded, i.e. it does not have to be parallel.

The difference to other magnetic principle based sensing technologies is that the sensing element inside the sensing module comprises one inductor only. In comparison to the prior art technology, there is no need for a separate magnetic field sensing (MFS) device to be placed inside the sensing module. The inventive sensor does not have to rely on returning secondary magnetic signals from the object 2 to be loaded. Is not necessary to measure the tilting or turning angle of the returning magnetic field. Further the sensor is insensitive to magnetic stray field as it is not measuring "returning fields". It is insensitive to accidentally stored magnetic field inside the object 2 to be loaded. It can achieve much larger air gaps between the object 2 to be loaded and the sensing module than achievable with other magnetic sensing technologies. As the inventive sensor is not relying on a returning magnetic field coming back from the object 2 to be loaded, the "losses" of the signal amplitude are much less and magnetic signal does not have to travel twice across the air-gap: from the 11 to the object 2 to be loaded and then back again. There are no signal phase delay issues between the generated magnetic field and the returning signal. It is much easier to automatically compensate for changes in the distance between the sensing module and the surface of the object 2 to be loaded. By modulation of the electrical magnetic field driver signal in amplitude or / and in frequency the measurement signal hysteresis can be reduced significantly through computation.

In the following it will be described how the sensor can alternatively be placed. In most applications it is very beneficial (because of limited accessibility) when the sensing module (of the mechanical force sensor system) can be placed from the side to the object 2 to be loaded, nearest to the location where the mechanical stresses have to be measured, here called sensing region. It is important that the generated magnetic field by the inductor 11 will get in touch with the object 2 to be loaded at the sensing region so that the eddy-current effect can take place. To increase the efficiency of the sensor system a flux concentrator is used to "guide" the generated magnetic fields to the sensing region and back again.

Fig. 10 illustrates that the inductor 11 can also be placed flat-faced from the side of the object 2 to be loaded. But this would even further reduce the ability to detect specific mechanical forces and is also a probably inefficient way to recover the targeted measurement signal as it is expected to have small signal measurement signals. The eddy-current based magnetic principle based "force" sensor will also work when placing the inductor 11 flat-faced from the side, nearest to the object 2 to be loaded (without the use of a flux-concentrator).

As illustrated in Fig. 11, alternatively, the magnetic field generating coil 11 can be wound around the object 2 to be loaded which then eliminates the need for a flux concentrator. However, when winding the coil directly onto the object 2 to be loaded then this limits the possibility to "orient" the magnetic flux direction within the object 2 to be loaded. Because of such limitation only very specific (and not all types of) mechanical forces can be detected and measured. The inductor 11 is wound directly around the Test-Object. In this case there is no need for a separate Flux-Concentrator (smaller space requirement, lower mechanical complexity).

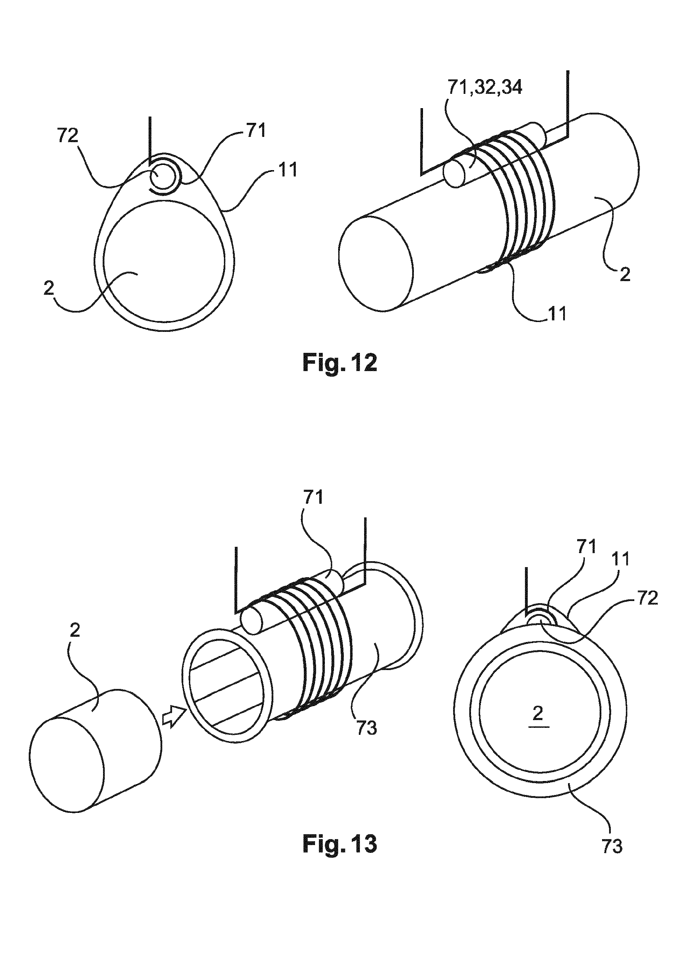

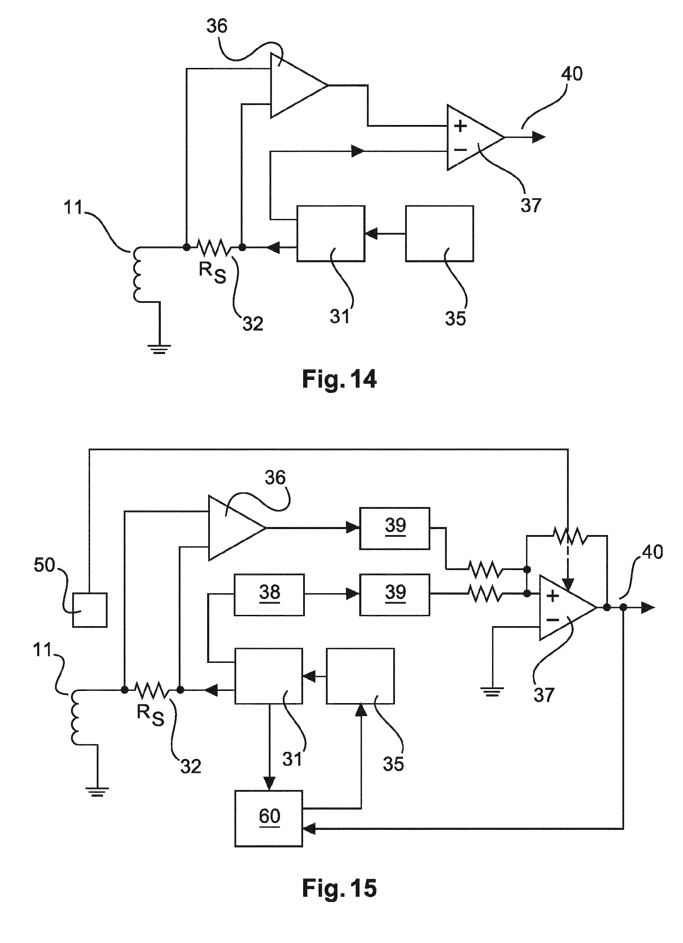

Figure 12 illustrates an embodiment of the invention, where the sensor system 100 further comprises a separate magnetic field sensing device 71 being aligned to the object 2 to be loaded and having a main detection direction being substantially parallel to an axis A around which the coil 11 is wound. In addition to the measurement at the coil 11, a modification of the magnetic flux in the object 2 and thus the magnetic field at the site of the separate magnetic field sensing device 71 can be detected with the magnetic field sensing device 71. It should be noted that it is possible to measure also other modification effects than an eddy current effect. The separate magnetic field sensing device 71 may be a coil. As an alternative the magnetic field measuring device may be a hall sensor or a flux gate. This coil 71 may have a ferromagnetic or ferrite core 72. The coil 71 with or without a core may be aligned to the object 2 to be measured. The generator coil 11 may be tightly be wound around the object 2 with aligned measuring coil 71 (with or without core 72). If the coil 71 has a core 72, the core may be a flux concentrator with legs and pole faces facing the object to be loaded (not illustrated). The wound generator coil 11 may constitute the mounting of the measuring coil 71 at the object 2. In this case the measuring coil 71 is fixedly connected to the object 2. This arrangement may be applied to non-moving objects or objects with a limited moving path length. The terminals of the measuring coil 71 can be used to measure the current, i.e. by using a shunt resistor 32 as described above, or to measure a voltage drop 34 as described above. The evaluation can be carried out as described with respect to Figs. 14 and 15.

Fig. 13 illustrates a further embodiment where the measuring coil 71 (with or without core 72) may also be aligned to a sleeve 73 so that the windings of the generator coil 11 may be used as a mounting for the measuring coil 71 onto the sleeve 73. The object 2 may be put through the through opening of the sleeve 73, so that the object can move with respect to the sleeve.

Fig. 14 illustrates an exemplary embodiment of a sensor electronics. The voltage drop at the sense resistor Rₛ acting as sensor 32 represents the electric current consumption of the Inductor 11. In one sensing module design option, the inductor 11 is wound onto a flux concentrator 12 that is placed nearest the object 2 to be loaded. The current consumption of the inductor 11 and the object 2 to be loaded through the eddy-current effect will be modulated by the mechanical stresses-changes that are applied onto the object 2 to be loaded. A signal generator marked below as "oscillator" 35 generates the desired frequency and signal shape. This signal will then be amplified by e.g. a power driver module to the desired levels (amplitudes) to assure that the correct and effective alternating current is running through the inductor 11. In the following electronic circuit description we use the term "carrier" signal for the voltage drop we can measure at the shunt resistor Rₛ 32. Under identical circumstances like constant room temperature, for example, and when no mechanical stress-changes are applied to the object 2 to be loaded, then the carrier signal detected and measured at the Resistor 32 will have a constant peak-to-peak voltage amplitude. With an instrumentation amplifier 36 the carrier signal can be recovered. As stated above, the carrier signal will show an amplitude modulation that is caused by changes in the mechanical stresses applied at the sensing region at the object 2 to be loaded. Under typical circumstances the carrier signal modulation is in the area of +/-1% to +/-10% of the recovered carrier signal amplitude. The modulation level is subject of several parameters, including but not limited to: applied mechanical stresses(below plastic deformation of the object 2 to be loaded, carrier frequency, electrical conductivity of the surface of the object 2 to be loaded, operating temperature, applied hardening process to the object 2 to be loaded if applicable. The relative large carrier signal amplitude makes it possibly difficult to recover the signal amplitude modulation only. Therefore the original and un-modulated carrier signal will be taken from a power driver module 31 and then subtracted from the modulated carrier signal by a "Subtraction" amplifier stage, which is considered to be a comparator 37. At the output of the Subtraction Amplifier 37 is then the raw-force signal 40 or, as an example the raw torque measurement signals, for example. This raw signal can then be further processed, amplified and filtered as required by the application.

Fig. 15 illustrates a further detailed embodiment of the evaluation unit 36-40. To avoid unwanted side-effects caused by signal phase shifts between the modulated and un-modulated carrier signal, peak detector circuits 39 are used. The simplest form of a peak detector is a rectifying circuit and a storage capacitor. To make any of the described circuits work correctly, both signals modulated and un-modulated carrier signals have to be normalized by a normalizer 38. Similar or even identical signal amplitudes simplifies a further processing in the comparator and increases the quality of the measurement. In some circumstances it is sufficient to normalize only one signal channel adjusting the signal amplitude of the un-modulated carrier signal to the levels of the modulated carrier signal as this will reduce the complexity of the required electronic components. With the sensor system as described above phase modulation of +/-4° are expected and/or amplitude modulation of about +/-2-3%. The sensor system runs at frequencies where eddy currents are expected in the object to be loaded. The system may be provided with at temperature measurement device 50 being capable of determining a temperature of the object to be loaded. Based on this determined temperature, a compensation can be carried out, in particular if the temperature coefficient of the object to be measured is know. This compensation can be carried out at different locations in the system Fig. 14 illustrates an exemplary embodiment, where the compensation is carried out in the comparator 37. The system may also comprise an initialization device 60. The initialization device 60 may automatically scan a range of parameters like e.g. amplitude ranges and frequency ranges, so as to determine an optimum amplitude and/or frequency. This may be helpful, in case the object to be loaded shows a poor response at particular frequencies, those frequencies can automatically avoided. The initialization device 60 may receive input from the generator unit 31 as well as from the output 40 so as to establish a relation between the generator signal properties and the output 40. The initialization deice 60 then may act on the oscillator to adapt the frequency and/or the amplitude. The remaining components correspond to that of Fig. 14.

It should be noted that the term 'comprising' does not exclude other elements or steps and the 'a' or 'an' does not exclude a plurality. Also elements described in association with the different embodiments may be combined.

It should be noted that the reference signs in the claims shall not be construed as limiting the scope of the claims.

### Reference list

- 1: Sensor unit
- 2: Object to be loaded and to be sensed
- 10: Sensing element
- 11: Coil
- 12: Flux concentrator
- 13: First pole face facing the object
- 14: Second pole face facing the object
- 15: Center portion of flux concentrator
- 16: End portion of central portion of flux concentrator
- 17: Yoke leg
- 18: Hole in yoke leg
- 19: Distance sensing coil
- 20: Sensing module
- 30: Sensor electronics, Controlling device
- 31: Constant voltage generator
- 32: Shunt resistor
- 33: Constant current generator
- 34: Voltage terminals
- 35: Oscillator
- 36: Instrumentation amplifier
- 37: Summing amplifier, comparator
- 38: Normalizer
- 39: Peak detector
- 40: Signal output
- 50: temperature detection device
- 60: initialization device
- 71: magnetic field sensing device, coil
- 72: core/flux concentrator for the magnetic field sensing coil
- 73: sleeve
- 100: Sensor system
- A: Axis around which coil 11 is wound corresponding to the extension direction of the object to be loaded

## Claims

1. Sensor unit for determining a mechanical load onto an object (2) to be loaded, the sensor unit (1) comprises:
a coil (11) being adapted to generate a magnetic flux in the object (2) to be loaded,
a current detector device (32) for detecting a current through the coil (11),
a controlling device (30) including a driving device (31) and an evaluation device (36-40),
wherein the driving device (31) is adapted to drive a predetermined voltage having a constant amplitude over the coil (11), wherein the voltage has a predetermined driving frequency,
wherein the evaluation device comprises a comparator (37) for comparing the predetermined driving voltage with the detected current through the coil (11), and is adapted to determine the mechanical load onto the object (2) to be loaded based on the eddy current related modulation of the detected current through the coil (11).

2. Sensor unit for determining a mechanical load onto an object to be loaded, the sensor unit (1) comprises:
a coil (11) being adapted to generate a magnetic flux in the object (2) to be loaded,
a voltage detector device (34) for detecting a voltage drop over the coil (11),
a controlling device (30) including a driving device (33) and an evaluation device (36-40),
wherein the driving device (33) is adapted to drive a predetermined current having a constant amplitude through the coil (11), wherein the current has a predetermined driving frequency,
wherein the evaluation device comprises a comparator (37) for comparing the predetermined driving current with the detected voltage drop over the coil (11), and is adapted to determine the mechanical load onto the object (2) to be loaded based on the eddy current related modulation of the detected voltage drop over the coil (11).

3. Sensor unit according to any of claims 1 and 2, wherein the evaluation device (36-40) comprises a normalizing unit (38) being adapted to normalize at least one of the both compared signals, so as to align the amplitudes of the both compared signals.

4. Sensor unit according to any one of claims 1 to 3, wherein the evaluation unit (36-40) comprises a peak detector (39) for each of the compared signals, and the comparator (37) is adapted to compare peak values of the signals to be compared.

5. Sensor unit according to any one of claims 1 to 4, wherein the sensor unit (1) comprises a distance sensor (19) being adapted to detect the distance of the sensor unit (1) with respect to the object (2) to be loaded.

6. Sensor unit according to any of claims 1 to 5, wherein the sensor unit (1) comprises a temperature detecting device (50) being adapted to detect a temperature being representative for a temperature of the object (2) to be loaded, wherein the evaluation unit (36-40) is adapted to determine the load onto the object to be loaded additionally based on the detected temperature.

7. Sensor unit according to any one of claims 1 to 6, wherein the controlling device comprises an initialization device (60) being adapted to detect optimal settings for the driving device (31, 33) based on a modulation of at least one of a driving frequency and a current or voltage amplitude, respectively, and the determination of a optimum gain in the evaluation device (36-40).

8. Sensor unit according to any one of claims 1 to 7, wherein the sensor unit (1) further comprises a flux concentrator (12) having wound the coil (11) there around.

9. Sensor unit according to claim 8, wherein the flux concentrator (12) comprises a middle portion (15) carrying the coil (11) and two yoke legs (17) having the end faces (13, 14), wherein the two yoke legs (17) each have a hole (18) for receiving a respective end section (16) of the middle portion (15) of the flux concentrator (12).

10. Sensor unit according to any one of claims 8 and 9, wherein the flux concentrator (12) comprises a ferromagnetic or a ferrite yoke having two end faces (13, 14), which two end faces facing the object (2) to be loaded.

11. Sensor unit according to any one of claims 8 to 10, wherein the distance sensor (19) is a coil being arranged between the two end faces (13, 14) of the flux concentrator (12) and having an orientation toward the object (2) to be loaded, wherein the end faces (13, 14) are formed so as to correspond to the surface of the object (2) to be loaded.

12. Sensor unit according to any one of claims 8 and 11, wherein the two end faces (13, 14) are partial faces of a circular cylinder.

13. Sensor system (100) comprising a sensor unit according to any one of claims 1 to 7, and an object (2) to be loaded, wherein the coil (11) is wound around the object (2) to be loaded.

14. Sensor system (100) according to claim 13, further comprising a separate magnetic field sensing device (71) being aligned to the object (2) and having a main detection direction being substantially parallel to an axis (A) around which the coil is wound.

15. Sensor system (100) comprising a sensor unit (1) according to any one of claims 1 to 7, and an object (2) to be loaded, wherein the coil (11) has a larger diameter than its length and is arranged so as to face a surface of the object (2) to be loaded, wherein the object (2) to be loaded has a circular cross section and the coil (11) has a shape following the bended surface of the object (2) to be loaded.
